# EUROPÄISCHE PATENTSCHRIFT

(11) **EP 1 527 503 B1**
(45) Veröffentlichungstag und Bekanntmachung des Hinweises auf die Patenterteilung: **14.05.2014**
(21) Anmeldenummer: 03792214.3
(22) Anmeldetag: 18.07.2003
(51) Int. Cl.: H01R 13/66, H04Q 1/14, H04Q 1/02, H01R 4/24, H01R 12/52, H01R 12/62, H01R 13/659, H04Q 1/06, H01R 13/658

(54) **VERTEILERANSCHLUSSMODUL FÜR DIE TELEKOMMUNIKATIONS- UND DATENTECHNIK**
DISTRIBUTOR CONNECTION MODULE FOR TELECOMMUNICATION AND DATA TECHNOLOGY
MODULE DE CONNEXION DE DISPOSITIF DE DISTRIBUTION UTILISE EN TECHNIQUE DE TELECOMMUNICATION ET DE TRAITEMENT DE DONNEES

(30) Priorität: 08.08.2002 DE 10236361
(43) Veröffentlichungstag der Anmeldung: 04.05.2005
(73) Patentinhaber: Tyco Electronics Services GmbH, 8200 Schaffhausen (CH)
(72) Erfinder: BUSSE, Ralf-Dieter, 15366 Hoppegarten (DE); NIJHUIS, Antony, NL-7242 CG Enschede (NL); KLEIN, Harald, 10318 Berlin (DE); STARK, Joachim, 13595 Berlin (DE); STORBECK, Carsten, 14532 Stahnsdorf (DE)
(74) Vertreter: Patentanwälte Bressel und Partner mbB
(86) Internationale Anmeldenummer: PCT/EP2003/007880
(87) Internationale Veröffentlichungsnummer: WO 2004/019456

(56) Entgegenhaltungen:
- EP-A- 0 651 465
- DE-A- 10 029 649
- FR-A- 2 704 360
- GB-A- 2 286 731
- US-A- 4 767 338
- US-A- 5 601 451
- US-A- 5 754 409
- US-B1- 6 305 950

## Beschreibung

Die Erfindung betrifft ein Verteileranschlußmodul für die Telekommunikations- und Datentechnik gemäß dem Oberbegriff des Patentanspruchs 1. Ein solches Verteileranschlussmodul ist aus der US-B1-6305950 bekannt.

Übliche Verteileranschlußmodule für die Kommunikations- und Datentechnik umfassen zwei Reihen von Anschlusskontakten, die an einer Stirnseite eines Gehäuses angeordnet sind. Ein solches Verteileranschlußmodul ist beispielsweise aus der DE 27 25 551 bekannt. Das Verteileranschlußmodul umfaßt eine erste Reihe von Anschlußkontakten auf der Kabelseite und gegenüberliegend eine zweite Reihe von Anschlußkontakten auf der Ranglerseite, wobei die Kontakte auf der Kabelseite als Eingangs- und die Kontakte auf der Rangierseite als Ausgangskontakte betrachtet werden können, auch wenn der Informationsfluß umgekehrt sein kann. Zwischen den Reihen sind Mittelkontakte angeordnet, in die Prüf- oder Schutzstecker einsteckbar sind. Ein Beispiel für derartige Schutzstecker sind 3- bzw. 5-punktige Überspannungsschutzmodule oder Staffelschutzschaltungen. Wird nun ein derartiger Überspannungsschutz in die Mittelkontakte gesteckt, so ist dieser Mittelabgriff und zum Teil auch benachbarte Mittelabgriffe Prüf- und Testzwecken nicht mehr zugänglich bzw. für die Test- und Prüfzwecke muß der Überspannungsschutz wieder entfernt werden, so dass in dieser Zeit die Kontakt nicht abgesichert sind.

Aus der DE 100 29 649 A1 ist ein Verteileranschluß für die Telekommunikations- und Datentechnik bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind. Die Eingangs- und Ausgangskontakte können dabei entweder in der gleichen Stirnseite des Gehäuses angeordnet sein oder aber an gegenüberliegenden Stirnseiten, wobei die Eingangskontakte der einen und die Ausgangskontakte der anderen Stirnseite zugeordnet sind. Dadurch wird eine klare Trennung zwischen der Kabel- und Rangierseite erreicht, wobei sich die einzelnen Adern bzw. Kabel nicht stören.

Im Übertragungsnetz zwischen den Knoten im Fernmeldenetz werden unter anderem STM1-Schnittstellen verwendet, die mit einer Vielzahl von Sendern und Empfängern verbunden sind, die beispielsweise durch Elektronikeinheiten gebildet werden, wobei derzeit beispielsweise die Übertragungskapazität bei 2 Mbit/s je Kanal liegt.

Der Erfindung liegt daher das technische Problem zugrunde, ein benutzerfreundliches Verteileranschlußmodul für die Telekommunikations- und Datentechnik zu schaffen, insbesondere zum Einsatz in Übertragungsnetzen zwischen den Knotenpunkten.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu sind die Ausgangskontakte als zwei einander gegenüberliegende Reihen von Steckverbindern ausgebildet, wobei mindestens zwei Eingangskontakte der ersten Reihe und mindestens zwei Eingangskontakte der zweiten Reihe mit den Ausgangskontakten jeweils eines Steckverbinders verbunden sind. Hierdurch können einem Kanal vier Adern zugeordnet werden, wobei zwei Adern zum Empfang und zwei Adern zum Senden von Daten dienen. Auf der Ausgangsseite ist dabei das Rangieren über den Steckverbinder sehr einfach, sodass vorkonfektionierte Kabel zur Anwendung kommen können.

Auf der Eingangsseite ist das Verteileranschlußmodul benutzerfreundlich gestaltet, da alle Adern zum Empfang von Daten des Teilnehmers einer Reihe von Eingangskontakten und alle Adern zum Senden von Daten eines Teilnehmers der anderen Reihe von Eingangskontakten zugeordnet werden können. Damit herrscht auf der Eingangsseite eine klare Trennung vom Sende- und Empfang-Modus, ähnlich wie bei den herkömmlichen Anschlußleisten, über die zwei Reihen von Anschlußkontakten die System- und Rangierseite getrennt sind. Die elektrische Verbindung der zugehörigen Eingangskontakte der ersten und zweiten Reihe zu ihrem gemeinsamen Steckverbinder erfolgt dabei über die mindestens eine Leiterplatte.

In einer bevorzugten Ausführungsform der Erfindung sind die Eingangskontakte der ersten und zweiten Reihe als Schneid-Klemm-Kontakte ausgebildet.

In einer weiteren bevorzugten Ausführungsform sind die Steckverbinder als RJ-45-Buchsen ausgebildet. Bei Ausführungsformen, wo einem Kanal nur vier Adern zugeordnet sind, werden entsprechend nur vier Kontakte der RJ-45-Buchse mit den Eingangskontakten verbunden, beispielsweise werden die Kontakte 3-6 beschaltet, wohingegen die Kontakte 1, 2, 7, 8 unbeschaltet bleiben (Numerierung der Kontakte gemäß RJ-45).

Gemäss der Erfindung werden die Steckverbinder ebenfalls in zwei einander gegenüberliegenden Reihen angeordnet. In diesem Fall müssen die elektrischen Verbindungen zwischen den Eingangs- und Ausgangskontakten teilweise gekreuzt werden, da von jedem Steckverbinder zwei Leitungen zur ersten Reihe und zwei Leitungen zur zweiten Reihe der Eingangskontakte geführt werden müssen.

In einer weiteren bevorzugten Ausführungsform sind daher innerhalb des Gehäuses zwei einander gegenüberliegende Leiterplatten angeordnet, die miteinander elektrisch verbunden sind, wobei über die elektrische Verbindung die Kreuzung erfolgt. Vorzugsweise erfolgt die elektrische Verbindung der beiden Leiterplatten über ein Flachbandkabel. Prinzipiell sind jedoch auch andere elektrische Verbindungen wie beispielsweise Steckkontakte möglich.

In einer weiteren bevorzugten Ausführungsform sind auf der Leiterplatte Funktions- und/oder Schutzelemente angeordnet, die elektrisch zwischen den Eingangs- und Ausgangskontakten liegen, wie beispielsweise Filter- oder Verstärkerschaltungen oder Überspannungsschutzelemente.

In einer weiteren bevorzugten Ausführungsform ist das Gehäuse mehrteilig ausgebildet, wobei mindestens ein Teil des Gehäuses aus Metall ist. Neben einem ansprechenden Design ermöglicht das metallische Gehäuse die direkte Ausbildung mit mindestens einem Erdungsclip, der aus dem Gehäuse ausgeformt ist und über Kontaktpads mit der Leiterplatte verbindbar ist. Weiter vorzugsweise ist das Metallgehäuse mit Verbindungselementen für Profilstangen und/oder -schienen ausgebildet.

Weiter vorzugsweise sind den Eingangskontakten Trennkontakte zugeordnet, wobei vorzugsweise jeweils einem Kontaktpaar ein eigener Trennkontakt für Meß- und Prüfzwecke zugeordnet ist. Anstelle von Trennkontakten können auch Schalt- oder Anschlußkontakte zur Anwendung kommen.

Die Erfindung wird nachfolgend anhand eines bevorzugten Ausführungsbeispieles näher erläutert. Die Fig. zeigen.
- Fig. 1: ein Blockschaltbild einer Anschlußumgebung eines Verteileranschlußmoduls,
- Fig. 2: eine perspektivische Vorderansicht auf ein Verteileranschlußmodul,
- Fig. 3: eine perspektivische Rückansicht auf das Verteileranschlußmodul,
- Fig. 4: eine Draufsicht auf das Verteileranschlußmodul,
- Fig. 5: eine perspektivische Darstellung der Leiterplatte mit einem Frontteil und
- Fig. 6: eine perspektivische Darstellung zweier Leiterplatten mit Frontteil.

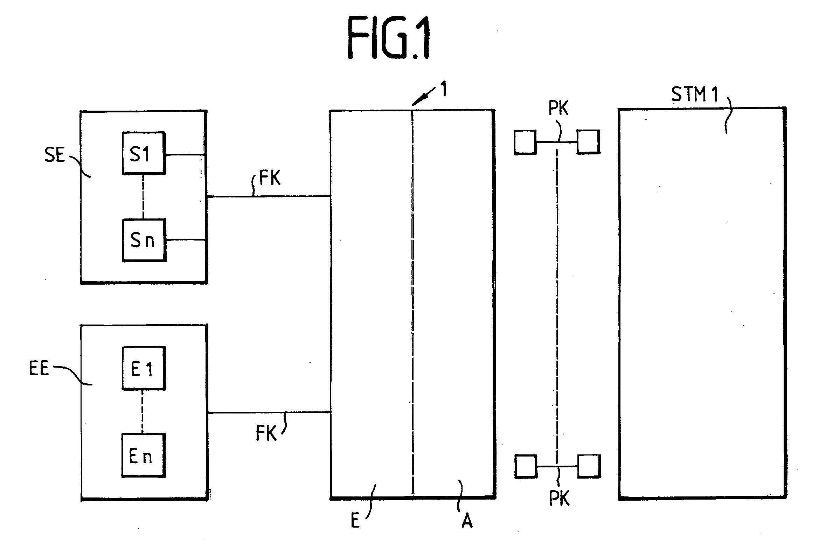

In der Fig. 1 ist das Verteileranschlußmödul 1 in einer möglichen Umgebung innerhalb eines Fernmeldenetzes dargestellt. Das Verteileranschlußmodul 1 umfasst eine Eingangsseite E und eine Ausgangsseite A, wobei die Begriffe Eingangs- und Ausgangsseite hier nur zur Definition dienen, da der Informationsfluß in beide Richtungen stattfindet. Auf der Eingangsseite E sind mehrere Sendemodule S₁-Sₙ und mehrere Empfangsmodule E₁-Eₙ angeordnet. Die Sende- und Empfangsmodule sind jeweils beispielsweise für eine Übertragungskapazität von 2 MB/s ausgelegt und sind als Elektronikeinheiten ausgebildet. Die einzelnen Sendemodule S1-Sn können dabei auch in einer übergeordneten Sendeeinheit SE zusammengefasst sein. Ebenso können die Empfangsmodule E₁-Eₙ zu einer Empfangseinheit EE zusammengefasst sein. Die Verbindung zwischen den Sende- und Empfangseinheiten SE, EE erfolgt über herkömmliche Fernmeldekabel FK, wobei beispielsweise je ein Adernpaar einem Modul zugeordnet ist. Auf der Ausgangsseite A ist ein STM1-Modul in SDH-Technik angeordnet, wobei die Verbindung zwischen der Ausgangsseite A und dem STM1-Modul über vorkonfektionierte Patchkabel PK erfolgt. In dem Verteileranschlußmodul 1 werden dann zu einem gemeinsamen Kanal zugehörige Adernpaare von Sende- und Empfangsmodulen zusammengefasst und als "Kanalkabel" an das STM1-Modul übergeben. Auf der Eingangsseite E findet dabei eine Separierung nach Sende- und Empfangsmodus statt, was später noch näher erläutert wird, wohingegen auf der Ausgangsseite eine Kanalseparierung erfolgt. Dabei sei angemerkt, dass auch die Sende- und Empfangseinheiten SE, EE zusammen als STM1-Modul ausgebildet sein können, das Verteileranschlußmodul 1 also zwischen zwei STM1-Modulen angeordnet ist.

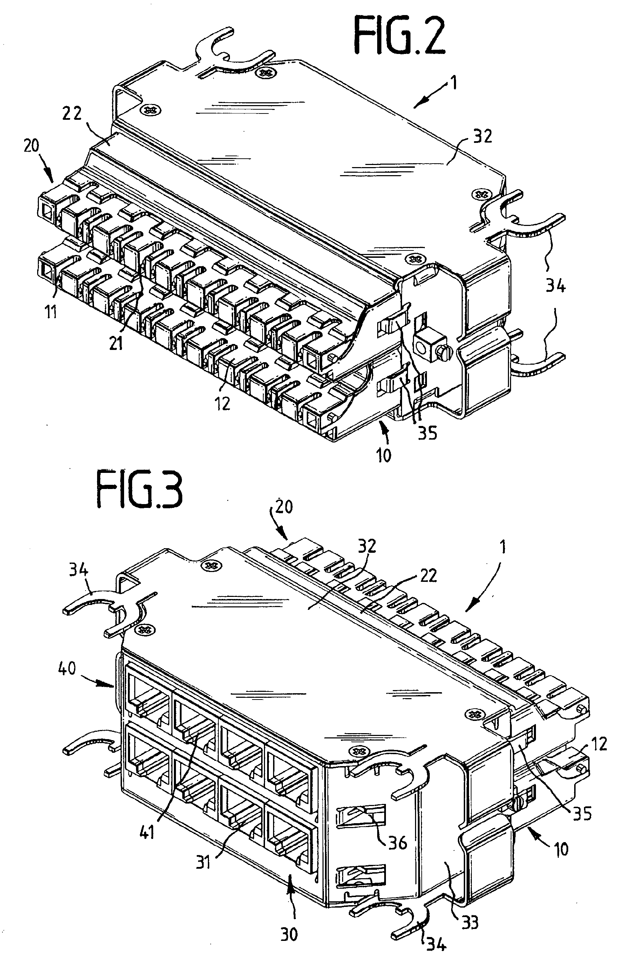

In den Fig. 2 und 3 ist perspektivisch das Verteileranschluß 1 dargestellt. Das Verteileranschlußmodul 1 umfasst eine erste Reihe von Eingangskontakten 10 und eine zweite Reihe von Eingangskontakten 20, die einander gegenüberliegend angeordnet sind. Im dargestellten Beispiel umfaßt jede Reihe sechzehn Schneid-Klemm-Kontakte 11, 21 zum Anschließen von acht Doppeladern. Auf der gegenüberliegenden Stirnseite sind eine erste Reihe von Ausgangskontakten 30 und eine zweite Reihe von Ausgangskontakten 40 angeordnet, wobei jeweils vier Ausgangskontakte einer Reihe in Form einer RJ-45-Buchse 31, 41 als Steckverbinder zusammengefasst sind. Somit umfasst das Verteileranschlußmodul 1 jeweils zweiunddreißig Eingangskontakte 10, 20 und Ausgangskontakte 30, 40. Weiter umfasst das Verteileranschlußmodul 1 zwei Frontteile 12, 22, die einen Teil des Gehäuses bilden und die Eingangskontakte 10, 20 umgeben. Die Frontteile 12, 22 sind dabei vorzugsweise aus Kunststoff.

Die Ausgangskontakte 30, 40 sind von zwei metallischen Seitenwänden 32 und einer metallischen Grundplatte 33 umgeben, die zusammen mit den beiden Frontteilen 12, 22 das Gehäuse bilden. Die beiden Seitenwände 32 sind mit der Grundplatte 33 verschraubbar. Die beiden Seitenwände 32 umfassen jeweils zwei Verbindungselemente 34, über die das Verteileranschlußmodul 1 auf ein nicht dargestelltes Profilstangen-System aufrastbar ist. Über Rastzungen 35 sind die beiden Frontteile 12, 22 mit der Grundplatte 33 verbunden. Des weiteren umfasst die Grundplatte 33 vier Erdungsclips 36, über die eine elektrische Verbindung zu Kontaktpads auf nicht sichtbaren Leiterplatten herstellbar ist. Über diese Leiterplatten werden die Eingangskontakte 10, 20 mit den Ausgangskontakten 30, 40 verbunden. Dabei werden jeweils zwei zu einer Doppelader zugehörige Eingangskontakte 10 der ersten Reihe und Eingangskontakte 20 der zweiten Reihe mit den Ausgangskontakten 30, 40 einer RJ-45-Buchse 31, 41 über die Leiterplatten elektrisch verbunden. Dabei werden über die Eingangskontakte 10 nur Adern angeschlossen, über die Daten zum STM1-Modul übertragen werden und über die Eingangskontakte 20 nur Adern angeschlossen, über die vom Teilnehmer gesendete Daten übertragen werden. Die vier angeschlossenen Kontakte einer RJ-45-Buchse 31, 41 sind also mit zwei Eingangskontakten 10 der ersten Reihe und zwei Eingangskontakten 20 der zweiten Reihe verbunden. Soll nun beispielsweise eine RJ-45 Buchse 41 mit den zugehörigen Eingangskontakten 10, 20 verbunden werden, so kann die Verbindung für die Eingangskontakte 20 nahezu gerade durchgezogen werden, wohingegen die Verbindung von den Eingangskontakten 10 im Gehäuse von unten nach oben kreuzen muß. Entsprechend umgekehrt sind die Verhältnisse bei der Kontaktierung einer RI-45-Buchse 31. Dieses Kreuzen erfolgt vorzugsweise über zwei einander gegenüberliegende Leiterplatten innerhalb des Gehäuses, was später noch näher erläutert wird. Dadurch wird erreicht, dass auf der Eingangsseite die beiden Übertragungsrichtungen übersichtlich voneinander getrennt angeordnet sind.

Auf der Ausgangsseite hingegen kann über die Integration der einem Kanal zugeordneten Ausgangskontakte in einem Steckverbinder sehr einfach und leicht mit vorkonfektionierten Kabeln rangiert werden. Da üblicherweise häufiger auf der Ausgangsseite als auf der Eingangsseite rangiert werden muß, können die Verbindungselemente 34 auch umgedreht werden, sodass nach dem Aufrasten auf die Profilstange die RJ-45 Buchsen 31, 41 frei zugänglich sind. Selbstverständlich können in einem Verteileranschlußmodul 1 mehr oder weniger als acht Kanäle angeschlossen werden.

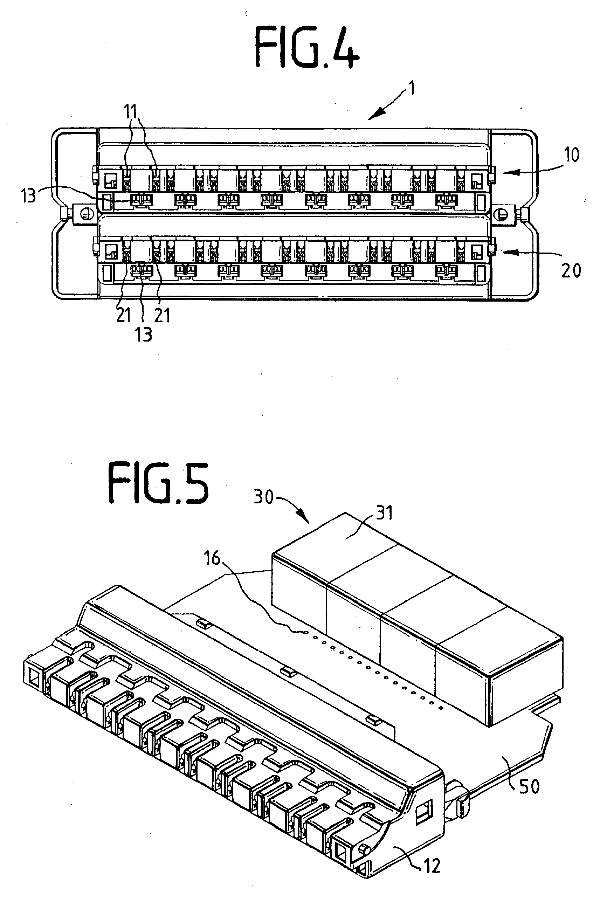

In der Fig. 4 ist eine Draufsicht auf das Verteileranschlußmodul 1 dargestellt. Dabei ist jedem zusammengehörigen Paar von Eingangskontakten 10, 20 ein von außen zugänglicher Trennkontakt 13 zugeordnet, wobei hinsichtlich der Ausbildung des Trennkontaktes 13 beispielsweise auf die DE 100 29 649 A1 verwiesen werden kann. An dieser Stelle sei angemerkt, dass die Eingangskontakte auch mit weiteren Kontakten zum Anschließen einer Abschirmung ausgebildet sein können. In diesem Fall wären jeweils drei Schneid-Klemm-Kontakte 11, 21 einer Doppelader zugeordnet.Auf der der Ausgangsseite zugewandten Seite der Leiterplatte 50 sind vier RJ-45-Buchsen 31 angeordnet. Das Frontteil 12 wird mit den Schneid-Klemm-Kontakten 11 auf die der Eingangsseite zugewandten Seite der Leiterplatte 50 aufgerastet, wobei die mit Gabelkontakten ausgebildeten Schneid-Klemm-Kontakte auf Kontaktpads auf der Leiterplatte 50 geschoben werden. Von diesen Kontaktpads sind dann die Eingangskontakte über nicht dargestellte Leiterbahnen mit Kontaktstellen 16 und/oder direkt mit RJ-45-Buchsen 31 verbunden.

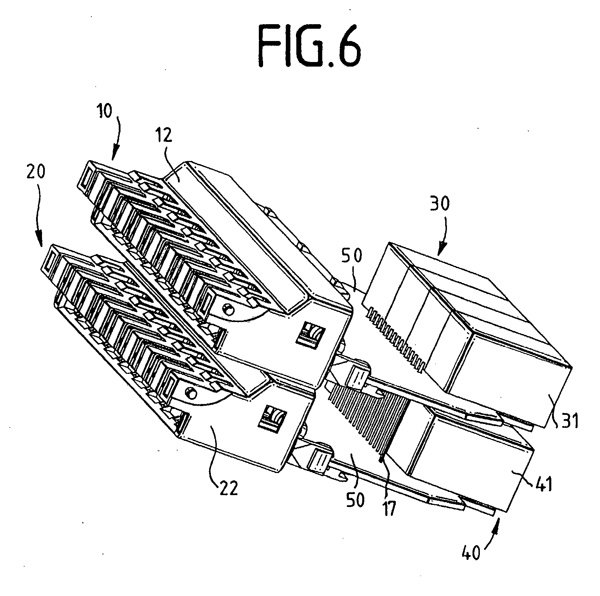

In der Fig. 6 sind zwei Leiterplatten 50 gemäß Fig. 5 dargestellt, die über ein Flachbandkabel 17 an den Kontaktstellen 16 miteinander verbunden sind. Über die Kontaktstellen 16 bzw. das Flachbandkabel 17 werden acht Eingangskontakte 10 auf die untere Leiterplatte 50 und acht Eingangskontakte 20 auf die obere Leiterplatte 50 durchgeschleift.

Das Verteileranschlußmodul 1 kann modulweise erweitert werden, sodass anstelle der beschriebenen zwei Reihen von Eingangs- und Ausgangskontakten eine Vielzahl von Reihen übereinander angeordnet werden können. Des weiteren können einem Steckverbinder auch mehr als vier Adern zugeordnet werden.

### BEZUGSZEICHENLISTE

- S₁-Sₙ: Sendemodule
- E₁-Eₙ: Empfangsmodule
- SE: Sendeeinheit
- EE: Empfangseinheit
- FK: Fernmeldekabel
- PK: Patchkabel
- STM1: STM1-Modul
- E: Eingangsseite
- A: Ausgangsseite

- 1: Verteileranschluß
- 10: Eingangskontakt
- 11: Schneid-Klemm-Kontakt
- 12: Frontteil
- 13: Trennkontakt
- 16: Kontaktstelle
- 17: Flachbandkabel
- 20: Eingangskontakt
- 21: Schneid-Klemm-Kontakt
- 22: Frontteil
- 30: Ausgangskontakt
- 31: RJ-45 Buchse
- 32: Seitenwände
- 33: Grundplatte
- 34: Verbindungselemente
- 36: Erdungscip
- 40: Ausgangskontakt
- 41: RJ-45-Buchse
- 50: Leiterplatte

## Patentansprüche

1. Verteileranschlußmodul für die Telekommunikations- und Datentechnik, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem mindestens eine Leiterplatte angeordnet ist, wobei die Eingangs- und Ausgangskontakte an den gegenüberliegenden Stirnseiten des Gehäuses angeordnet sind, wobei die Eingangskontakte einer Eingangsseite und die wobei Ausgangskontakte einer Ausgangsseite zugeordnet sind, die Eingangskontakte (10, 20) als mindestens zwei einander gegenüberliegende Reihen von Kontakten ausgebildet sind wobei die Eingangskontakte (10, 20) der ersten und zweiten Reihe über die mindestens eine Leiterplatte (50) mit den Ausgangskontakten (30; 40) der Steckverbinder verbunden sind.
**dadurch gekennzeichnet, dass**
die Ausgangskontakte (30, 40) als zwei einander gegenüberliegende Reihen von Steckverbindern ausgebildet sind, wobei mindestens zwei Eingangskontakte (10) der ersten Reihe und mindestens zwei Eingangskontakte (20) der zweiten Reihe mit den Ausgangskontakten (30; 40) jeweils eines Steckverbinders verbunden sind.

2. Verteileranschlußmodul nach Anspruch 1, **dadurch gekennzeichnet, dass** die Eingangskontakte (10, 20) als Schneid-Klemm-Kontakte (11, 21) ausgebildet sind.

3. Verteileranschlußmodul nach Anspruch 1 oder 2, **dadurch gekennzeichnet, dass** die Steckverbinder als RJ-45-Buchsen (31, 41) ausgebildet sind.

4. Verteileranschlußmodul nach einem der vorangegangenen Ansprüche, **dadurch gekennzeichnet, dass** innerhalb des Gehäuses zwei einander gegenüberliegende Leiterplatten (50) angeordnet sind, die miteinander elektrisch verbunden sind.

5. Verteileranschlußmodul nach Anspruch 4, **dadurch gekennzeichnet, dass** die Leiterplatten (50) über ein Flachbandkabel (17) miteinander verbunden sind.

6. Verteileranschlußmodul nach einem der vorangegangenen Ansprüche, **dadurch gekennzeichnet, dass** auf der Leiterplatte (50) Funktions- und/oder Schutzelemente angeordnet sind, die elektrisch zwischen den Eingangs- und Ausgangskontakten (10, 20, 30, 40) angeordnet sind.

7. Verteileranschlußmodul nach Anspruch 6, **dadurch gekennzeichnet, dass** die Schutzelemente als Überspannungsschutzelemente oder -schaltungen ausgebildet sind.

8. Verteileranschlußmodul nach einem der vorangegangenen Ansprüche, **dadurch gekennzeichnet, dass** das Gehäuse mehrteilig ausgebildet ist, wobei mindestens ein Teil des Gehäuses aus Metall ist.

9. Verteileranschlußmodul nach Anspruch 8, **dadurch gekennzeichnet, dass** das Metallgehäuse mit Erdungsclips (36) ausgebildet ist, die mit Kontaktpads auf der Leiterplatte (50) verbunden sind.

10. Verteileranschlußmodul nach Anspruch 8 oder 9, **dadurch gekennzeichnet, dass** das Metallgehäuse mit Verbindungselementen (34) für Profilstangen und/oder -schienen ausgebildet ist.

11. Verteileranschlußmodul nach einem der vorangegangenen Ansprüche, **dadurch gekennzeichnet, dass** den Eingangskontakten (10, 20) Trennkontakte (13) zugeordnet sind.

## Claims

1. A distribution box connection module for telecommunications and data technology, comprising a housing in which externally accessible input and output contacts are arranged for the connection of cables and cores, with the housing having a cavity in which at least one printed circuit board is arranged, with the input and output contacts being arranged on the opposite end faces of the housing, and with the input contacts being associated with one input side and the output contacts being associated with one output side, with the input contacts (10, 20) being in the form of at least two mutually opposite rows of contacts, with the input contacts (10, 20) in the first row and in the second row being connected via the at least one printing circuit board (50) to the output contacts (30; 40) in the plug connectors,
**characterized in that** the output contacts (30, 40) are in the form of two mutually opposite rows of plug connectors, with at least two input contacts (10) in the first row and least two input contacts (20) in the second row being connected to the output contacts (30; 40) of a respective plug connector.

2. Distribution box connection module according to Claim 1, **characterized in that** the input contacts (10, 20) are in the form of insulation displacement terminal contacts (11, 21).

3. Distribution box connection module according to Claim 1 or 2, **characterized in that** the plug connectors are in the form of RJ-45 female connectors (31, 41).

4. Distribution box connection module according to one of the preceding claims, **characterized in that** two mutually opposite printed circuit boards (50) are arranged within the housing and are electrically connected to one another.

5. Distribution box connection module according to Claim 4, **characterized in that** the printed circuit boards (50) are connected to one another via a flat ribbon cable (17).

6. Distribution box connection module according to one of the preceding claims, **characterized in that** function and/or protection elements are arranged on the printed circuit board (50), and are arranged electrically between the input and output contacts (10, 20 , 30, 40).

7. Distribution box connection module according to Claim 6, **characterized in that** the protection elements are in the form of overvoltage protection elements or circuits.

8. Distribution box connection module according to one of the preceding claims, **characterized in that** the housing is formed from two or more parts, with at least part of the housing being composed of metal.

9. Distribution box connection module according to Claim 8, **characterized in that** the metal housing is formed with grounding clips (36), which are connected to contact pads on the printed circuit board (50).

10. Distribution box connection module according to Claim 8 or 9, **characterized in that** the metal housing is formed with connecting elements (34) for profiled rods and/or rails.

11. Distribution box connection module according to one of the preceding claims, **characterized in that** the input contacts (10, 20) have associated isolating contacts (13).

## Revendications

1. Module de raccordement de répartiteur pour la télématique et l'informatique, comprenant un boîtier dans lequel sont disposés des contacts d'entrée et de sortie de manière accessible depuis l'extérieur pour le raccordement de lignes et de fils, le boîtier étant réalisé avec un espace creux dans lequel est disposé au moins un circuit imprimé, les contacts d'entrée et de sortie étant disposés sur les côtés frontaux opposés du boîtier, les contacts d'entrée étant associés à un côté d'entrée et les contacts de sortie à un côté de sortie, les contacts d'entrée (10, 20) étant réalisés sous la forme d'au moins deux rangées de contacts opposées l'une à l'autre, les contacts d'entrée (10, 20) de la première et de la deuxième rangée étant reliés par le biais de l'au moins un circuit imprimé (50) avec les contacts de sortie (30 ; 40) des connecteurs, **caractérisé en ce que** les contacts de sortie (30 ; 40) sont réalisés sous la forme de deux rangées de connecteurs opposées l'une à l'autre, au moins deux contacts d'entrée (10) de la première rangée et au moins deux contacts d'entrée (20) de la deuxième rangée étant reliés avec les contacts de sortie (30 ; 40) à chaque fois d'un connecteur.

2. Module de raccordement de répartiteur selon la revendication 1, **caractérisé en ce que** les contacts d'entrée (10, 20) sont réalisés sous la forme de contacts à borne guillotine (11, 21).

3. Module de raccordement de répartiteur selon la revendication 1 ou 2, **caractérisé en ce que** les connecteurs sont réalisés sous la forme de prises RJ-45 (31, 41).

4. Module de raccordement de répartiteur selon l'une des revendications précédentes, **caractérisé en ce qu'**à l'intérieur du boîtier sont disposés deux circuits imprimés (50) opposés l'un à l'autre qui sont reliés électriquement entre eux.

5. Module de raccordement de répartiteur selon la revendication 4, **caractérisé en ce que** les circuits imprimés (50) sont reliés entre eux par le biais d'un câble en nappe (17).

6. Module de raccordement de répartiteur selon l'une des revendications précédentes, **caractérisé en ce que** des éléments fonctionnels et/ou de protection sont disposés sur le circuit imprimé (50), lesquels sont disposés électriquement entre les contacts d'entrée et de sortie (10, 20, 30, 40).

7. Module de raccordement de répartiteur selon la revendication 6, **caractérisé en ce que** les éléments de protection sont réalisés sous la forme d'éléments ou de circuits de protection contre les surtensions.

8. Module de raccordement de répartiteur selon l'une des revendications précédentes, **caractérisé en ce que** le boîtier est réalisé en plusieurs parties, au moins une partie du boîtier étant en métal.

9. Module de raccordement de répartiteur selon la revendication 8, **caractérisé en ce que** le boîtier métallique est réalisé avec des clips de mise à la terre (36) qui sont reliés avec des pastilles de contact sur le circuit imprimé (50).

10. Module de raccordement de répartiteur selon la revendication 8 ou 9, **caractérisé en ce que** le boîtier métallique est réalisé avec des éléments de liaison (34) pour des barres et/ou des rails profilé(e)s.

11. Module de raccordement de répartiteur selon l'une des revendications précédentes, **caractérisé en ce que** des contacts de séparation (13) sont associés aux contacts d'entrée (10, 20).
